# EUROPEAN PATENT SPECIFICATION

(11) **EP 4 539 265 B1**
(45) Date of publication and mention of the grant of the patent: **27.05.2026**
(21) Application number: 24382868.8
(22) Date of filing: 02.08.2024
(51) Int. Cl.: H01R 13/74, B60R 1/02, B60R 16/02, H01R 13/60, H01R 43/26, B60R 1/072

(54) **CONNECTOR SYSTEM OF A REAR-VIEW MIRROR REGULATION SYSTEM AND ASSEMBLY METHOD**
VERBINDUNGSSYSTEM EINES RÜCKSPIEGELREGELUNGSSYSTEMS UND MONTAGEVERFAHREN
SYSTÈME DE CONNECTEUR D'UN SYSTÈME DE RÉGLAGE DE RÉTROVISEUR ET PROCÉDÉ D'ASSEMBLAGE

(43) Date of publication of application: 16.04.2025
(73) Proprietor: Ficosa Automotive, S.L.U., 08232 Viladecavalls (ES)
(72) Inventor: BRAVO CORBACHO, David, 08232 Viladecavalls (ES); GÓMEZ TIMONEDA, David, 08232 Viladecavalls (ES)
(74) Representative: Elzaburu S.L.P.

(56) References cited:
- US-A1- 2013 189 875
- US-A1- 2018 351 283

## Description

### Field of the invention

The present disclosure relates to rear-view mirrors, for instance, for motor vehicles. More specifically, the present disclosure relates to a connector system of a rear-view mirror regulation system and its assembly method.

### Background of the invention

Rear-view mirrors for motor vehicles are known in the state of the art. The rear-view mirrors comprise a mirror head carrying a mirror actuator that holds a reflective mirror element.

Rear-view mirrors frequently have electrical components integral to the design of the mirror, for instance, for a glass regulation function. Wiring provides a connection of the rear-view mirror to the main electrical architecture of the vehicle. The wiring comprises a connector, for instance a plug, at the end of the wires which mates within a receptacle, for instance a socket, in the rear-view mirror side. Ensuring proper connection is of utmost importance because if the connectors are not fully engaged within the receptacle, the device may not function properly. In addition, if the connector is not assembled correctly it may lead to connectors half-way connected. This half-connected state may be dangerous, as the connector can still receive electricity and function even if not correctly assembled, and passing connection tests when they are not properly connected, leading to a further failure in driving conditions.

Additionally, during the life of the rear-view mirror, vibrations and other conditions could potentially disconnect the connector, making the glass regulation function no longer available.

It is known for the rear-view mirror component which receives the connector to have an element commonly known as an "anti-back-out rib". This is an element located such that if the connector is not fully engaged within the receptacle, the anti-back-out rib interferes with the connector during assembly, lifting up an actuator, and preventing the attachment to be made.

In addition, the assembly process presents some difficulties as the operator has to perform the connection to the mirror actuator as a subassembly, expecting a precise management of a light wiring harness with smaller connectors when holding a large part.

Another opportunity for improvement comes from the material handling reduction in production process, as the mirror actuator has to be moved together with the connected wiring harness with the resulting volume and storing spacing.

Therefore, there is a need for a connection system that helps the operator to avoid mistakes and defects in the connection process and that facilitates the assembly process.

It is known document US2018351283, disclosing an electrical connector assembly including a cover, an electrical connector, and a connecting member connecting the cover with the electrical connector. The document also discloses a method of assembling the electrical connector assembly, including providing a cover, providing a connecting member, providing an electrical connector, connecting the electrical connector with the connecting member to form an intermediate assembly, and connecting the intermediate assembly with the cover. Connecting the intermediate assembly with the cover may include disposing a first flange of the connecting member in a recess or groove of the cover, and disposing a second flange of the connecting member at least partially between opposing axial faces of the cover and the electrical connector.

### Summary of the invention

It is an object of the invention a connector system of a rear-view mirror regulation system according to independent claim 1.

The connector system is configured to be located in correspondence with, or physically associated or connected to, at least a receptacle of an electrical and/or data wire connector. The receptacle is located in a rear-view mirror actuator for the regulation of the mirror so that the electrical and/or data wire connector and the receptacle are in electrical connection with the rear-view mirror for its regulation, for instance, adjusting its position.

The connector system comprises:
- at least a first opening configured to provide access to the receptacle for the electrical and/or data wire connector. The first opening has two sides, one side facing towards the mirror actuator and another opposite side,
   and

- a clip member configured to receive the electrical and/or data wire connector, the clip member being configured to be located on a side of the first opening opposite to the side configured to face the mirror actuator and comprising:
   - a first portion having a longitudinal direction parallel to the connection direction of the electrical and/or data wire connector and comprising a first longitudinal end joined adjacent, i.e., next to or touching, to the edge of the first opening and a second longitudinal end opposite to the first longitudinal end, and
   - a second portion located at the second longitudinal end of the first portion and forming an angle with the first portion, the second portion being configured to avoid the longitudinal movement of the electrical and/or data wire connector in a direction opposite to the connection direction.

The connection direction is the direction in which the electrical and/or data wire connector is plugged into the receptacle.

To receive is understood in the specification as to act as a receptacle or container for the electrical and/or data wire connector.

The second portion forming an angle with the first portion is understood as not being in the same line or aligned. The second portion usually will form an angle between 0º and 180º with the first portion and oriented towards the first opening side so as to interfere with the electrical and/or data wire connector. In an embodiment, the angle is between 30º and 150º. Preferably between 45º and 135º and most preferably between 75º and 105º.

The connector system assures that the electrical and/or data wire connector is properly connected or fully engaged into the receptacle and that it cannot be disengaged from the connector once fully engaged.

In an embodiment, the second portion is also configured to cooperate in the insertion of the electrical and/or data wire connector forcing its introduction into the receptacle.

It is understood by a clip member any of various devices that grip, clasp or hook the electrical and/or data wire connector. In an embodiment, the clip member may have a certain degree of flexibility so as to hold the electrical and/or data wire connector in place, although a rigid clip member would also be possible.

Therefore, the claimed invention allows the connector system to include a poka-yoke system for the electrical wire actuator connection. A poka-yoke is any mechanism in a process that helps an equipment operator avoid mistakes and defects in its connection.

According to the above, the claimed system will only allow unidirectional movement on the electrical and/or data wire connector's assembly axis, locking it in its opposite direction, i.e., opposite to the connection direction, once assembled to ensure:
- The correct connection between the electrical and/or data wire connector and the receptacle that is in connection with the rear-view mirror for its regulation.
- The elimination of risk of the electrical and/or data wire connector disconnecting from the connection during the life of the rear-view mirror.

According to the invention, this is achieved by adding a clip member to the connector system which would, for instance, act as a stopper or even force the back part of the electrical and/or data wire connector against the receptacle.

In an embodiment, the claimed invention comprises a clip member comprising the second longitudinal end being movable by the electrical and/or data wire connector so as to be received in the clip member. For instance, the first portion may be flexible enough to open and house the electrical and/or data wire connector and a second portion strong enough to ensure that the electrical and/or data wire connector cannot disconnect from the connector system once the electrical wire connector is properly connected.

In addition, the claimed system allows freedom and versatility in the assembly process order that other known system does not allow.

It is also an object of the present invention a rear-view mirror for motor vehicles that comprises:
- a rear-view mirror actuator comprising a receptacle of an electrical and/or data wire connector,
- a connector system according to the above being configured to be located in correspondence with the receptacle.

It is also an object of the present invention an assembly method of a connector system of a rear-view mirror regulation system according to independent claim 11. The connector system is according to the above described and the assembly method comprises the step of introducing the electrical and/or data wire connector into the opening so that the clip member receives and avoids the longitudinal movement of the electrical and/or data wire connector in a direction opposite to the connection direction.

### Description of the figures

To complete the description and in order to provide for a better understanding of the invention, drawings are provided. Said drawings form an integral part of the description and illustrate preferred embodiments of the invention. The drawings comprise the following figures.
Figure 1 shows a perspective view of an embodiment of the connector system, the electrical and/or data wire connector and the rear-view mirror actuator.
Figure 2 shows a longitudinal cross-section of the embodiment of figure 1 in a connected status.
Figures 3 to 5 show a perspective view of the embodiment of the connector system of figure 1 and a first assembly method embodiment.
Figures 6 to 10 show a perspective view of the embodiment of the connector system of figure 1 and a second assembly method embodiment.
Figure 11 shows a perspective view of an embodiment of the connector system, the electrical and/or data wire connector and the rear-view mirror actuator in which the electrical and/or data wire connector is rotated 90º with respect its position in figure 1.
Figure 12 shows a perspective view of a second embodiment of the connector system.
Figures 13 to 16 show a perspective view of the embodiment of the connector system of figure 12 and an assembly method embodiment.
Figure 17 show a detailed view of an opening of the embodiment shown in figures 13 to 16.
Figures 18 show a front view of the embodiment of the connector system of figure 12 with two different kind of electrical and/or data wire connectors.
Figure 19 shows a perspective view of another embodiment of the connector system.
Figures 20 and 21 show an assembly method of the embodiment of figure 19.
Figures 22 show another assembly method of the embodiment of figure 19.
Figures 23 show another assembly method of the embodiment of figure 19.

### Detailed description of the invention

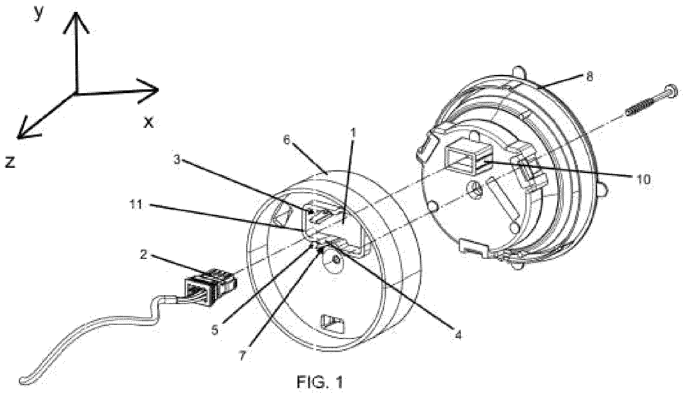

Figure 1 discloses an embodiment of the connector system of a rear-view mirror regulation system.

The connector system comprises a first opening (1) for the entrance of an electrical and/or data wire connector (2). The first opening (1) is configured to be located in correspondence with the receptacle (10) of the electrical and/or data wire connector (2) which is in electrical connection with the rear-view mirror for its movement. The connector system also comprises a clip member configured to receive the electrical and/or data wire connector (2) and comprising:
- a first portion (4) having a longitudinal direction parallel to the connection direction of the electrical and/or data wire connector (2) and comprising a first longitudinal end (4.1) joined adjacent to the edge of the first opening (1) and a second longitudinal end (4.2) opposite to the first longitudinal end (4.1), and
- a second portion (5) located at the second longitudinal end (4.2) of the first portion (4) and forming an angle with the first portion (4), the second portion (5) being configured to avoid the longitudinal movement of the electrical and/or data wire connector (2) in a direction opposite to the connection direction.

In the shown embodiments, the first opening (1) is located in a plane XY as shown in figure 1. The longitudinal movement or connection direction of the electrical and/or data wire connector (2) is along the Z axis. Once the electrical and/or data wire connector (2) is inserted into the receptacle (10), the second portion (5) avoids its movement in a Z direction opposite to said receptacle (10). Thus, the movement of the electrical and/or data wire connector (2) is limited in a longitudinal direction by the second portion (5) of the clip member.

The shown figures disclose a rear-view mirror regulation system comprising:
- a rear-view mirror actuator (8) comprising the receptacle (10) of the electrical and/or data wire connector (2),
- the connector system according to the different embodiments disclosed in the figures and described in this description and being configured to be located in correspondence with the receptacle (10).

The mirror actuator (8) holds a reflective mirror element.

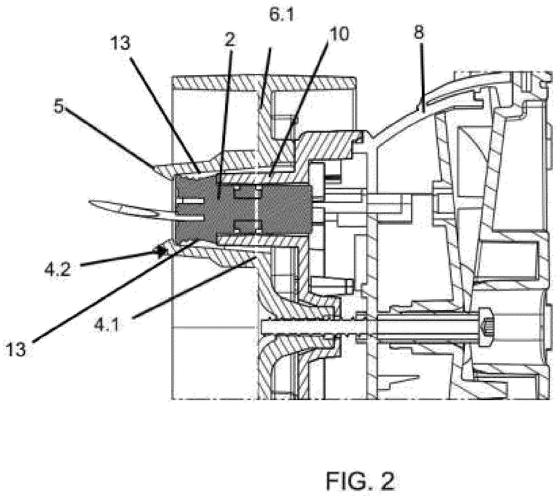

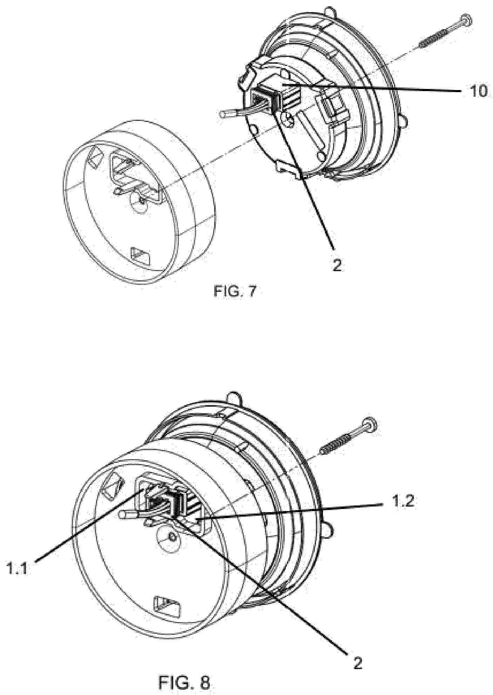

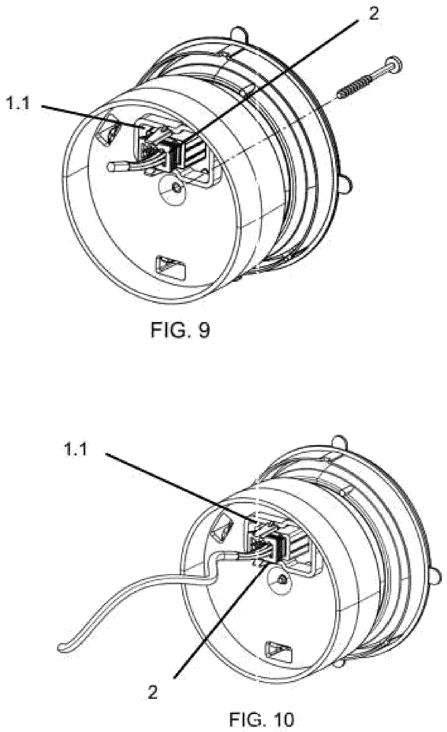

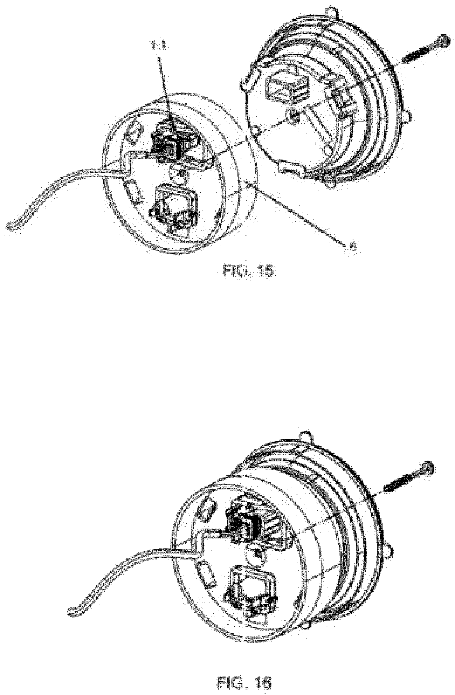

In the shown embodiment of figures 1 to 17, the first opening (1) comprises a wall (11) parallel to the connection direction, i.e., perpendicular to the first opening (1) plane, and configured to limit the position of the electrical and/or data wire connector (2) in a transversal direction. The wall is located in the side of the first opening (1) opposite to the mirror actuator. Having the position of the electrical and/or data wire connector (2) limited in the longitudinal and the transversal direction, the connection to the receptacle (10) is done in a simple, quick and reliable way. Particularly, in the shown embodiments, the wall (11) is a continuous wall that surrounds the first opening (1).

In an embodiment, the second longitudinal end (4.2) is movable by the electrical and/or data wire connector (2) so as to be received in the clip member. Alternatively, a rigid clip member would also be possible.

In an embodiment shown in the figures, the connector system comprises a mounting plate (6) located in correspondence with the receptacle (10). The first opening (1) is located in the mounting plate (6) for receiving the electrical wire connector (2). Alternatively, the clip member could be directly located in the mirror actuator (8) instead of the connector system comprising the mounting plate (6).

In the shown embodiment, the mounting plate (6) is thus redesigned to include a poka-yoke system for the placement of the electrical and/or data wire connector (2) in the mounting plate (6).

The mounting plate (6) is thus attached to the mirror actuator (8), so that the surface of the mirror actuator (8) comprising the receptacle (10) is located next to the mounting plate (6).

In the shown embodiment, the mounting plate (6) has a main surface (6.1), that maybe planar, and the first opening (1) is located in said main surface (6.1). Main surface (6.1) is understood as the largest surface in the mounting plate (6) which might be parallel to the surface in which the receptacle (10) is located. Therefore, the electrical and/or data wire connector (2) is connected perpendicularly to the main surface (6.1).

In the embodiment shown in figures 1 to 17, the connector system comprises a first clip member (3) and a second clip member (7) located in relation to the first opening (1) and comprising both the first portion (4) and the second portion (5). The electrical and/or data wire connector (2) is received between the first clip member (3) and the second clip member (7). Thus, the disclosed embodiment comprises two clip members (3, 7), comprising both a first portion (4) to house the electrical and/or data wire connector (2) and a second portion (5) strong enough to ensure that the electrical and/or data wire connector (2) cannot disconnect from the receptacle (10) once the electrical wire connector (2) is properly connected.

As previously stated, one of the advantages of the claimed invention is that it allows freedom in the assembly process steps, as the electrical and/or data wire connector (2) can be assembled before or after the mirror actuator (8) is fixed to the mounting plate (6), for instance.

The claimed assembly method comprises the steps of:
- introducing the electrical and/or data wire connector (2) into the opening (1, 9) so that the clip member receives it (2),
- continuing the introduction of the electrical and/or data wire connector (2) into the opening (1, 9) until the electrical and/or data wire connector (2) is located between the second portion (5) of the clip member and the opening (1, 9) so as to avoid its longitudinal movement in a direction opposite to the connection direction.

At least three different assembly method are envisaged in figures 1 to 17.

As previously stated, in the embodiment shown in figures 1 to 17, the connector system comprises a mounting plate (6) having the first opening (1) configured to receive the electrical and/or data wire connector (2), the first portion (4) of the clip member being joined adjacent to the edge of the first opening (1).

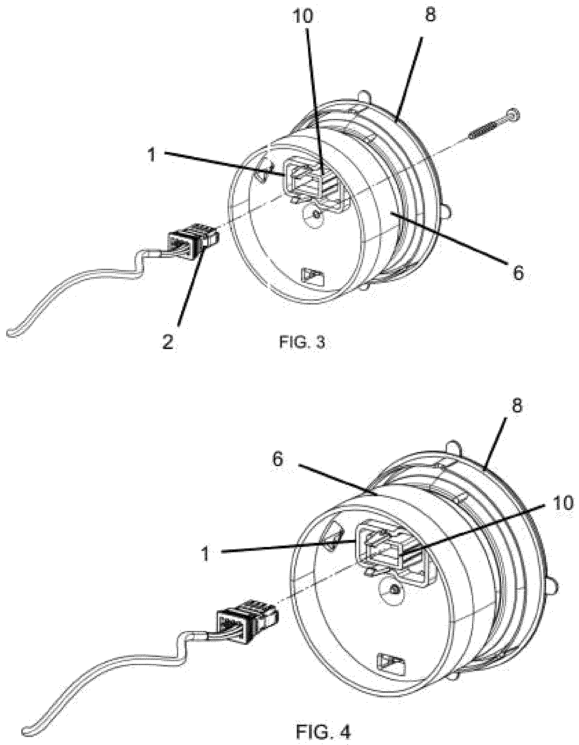

In figures 3 to 5 the mounting plate (6) and the rear-view mirror actuator (8) are assembled and afterwards the electrical and/or data wire connector (2) is connected into the receptacle (10) through the first opening (1).

In an embodiment, the first opening (1) comprises a first opening portion (1.1) and a second portion (1.2). The first opening portion (1.1) and the second opening portion (1.2) are adapted to receive the electrical and/or data wire connector (2). The first opening portion (1.1) is located, in use, in correspondence with the receptacle (10) to provide access for the electrical and/or data wire connector (2) and comprising the clip member. The second opening portion (1.2) is intended solely for receiving the electrical and/or data wire connector (2) but not for retaining it (2) in the assembled position. The purpose of the second opening portion (1.2) is to allow the electrical and/or data wire connector (2) to ease the connector pass through the mounting plate (6) without damaging the clip member.

In the shown figures, the effective area or net area of the first opening portion (1.1) is smaller than the effective area of the second opening portion (1.2). Thus, the usable space of the first opening portion (1.1) is smaller than the usable space of the second opening portion (1.2) so the second opening portion (1.2) easily allows the passage of the electrical and/or data wire connector (2). Moreover, the first opening portion (1.1) comprises a clip member while the second opening portion (1.2) is free of clips.

In an embodiment shown in figures 1 to 17, the first opening portion (1.1) is located approximately perpendicular to the second opening portion (1.2) so that in the first opening (1) it is possible to locate the electrical and/or data wire connector (2) in a first position and in a second position which consist of the electrical and/or data wire connector (2) rotated approximately 90º.

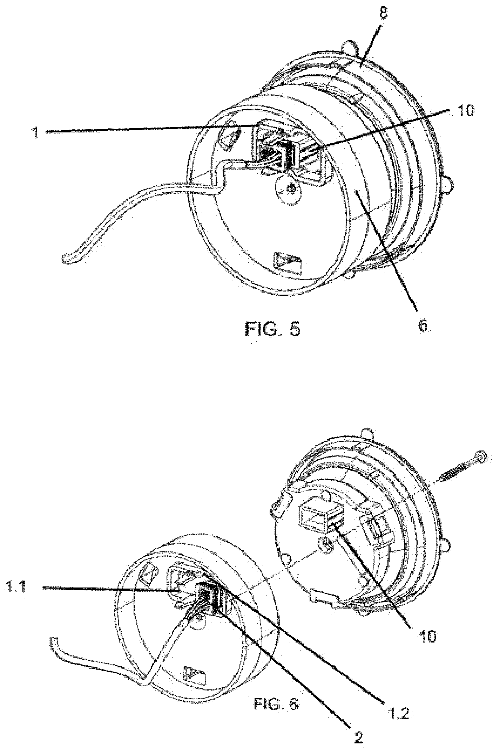

In figures 6 to 10, the assembly method comprises the steps of:
- connecting the electrical and/or data wire connector (2) into the receptacle (10), and afterwards
- assembling the mounting plate (6) and the mirror actuator (8) so that the clip member receives the electrical and/or data wire connector (2) and assures its proper connection.

Specifically, the embodiment shown in figures 6 to 10, before connecting the electrical and/or data wire connector (2) into the receptacle (10), the assembly method comprises the step of passing the electrical and/or data wire connector (2) through the second opening portion (1.2) to be connected into the receptacle (10). Therefore, the embodiment comprises the steps of going through the second portion (1.2) first. In the shown embodiment, the electrical and/or data wire connector (2) is turned about 90º to be connected into the receptacle (10).

Thus, initially, the mirror actuator (8), the mounting plate (6), the electrical and/or data wire connector (2) and fastening means to join the mirror actuator (8) are located nearby. The electrical and/or data wire connector (2) is located aligned with the second portion (1.2) of the first opening (1) so that in a next step it will go through or plug in the second portion (1.2) to optimize time of assembly. Afterwards, the electrical and/or data wire connector (2) is assembled into the receptacle (10). Next, the mounting plate (6) is assembled with the mirror actuator (8) so that the receptacle (10) and the first portion (1.1) of the first opening (1) are aligned. In an embodiment, the electrical and/or data wire connector (2) will contact the clip member before the mounting plate (6) is fully assembled. In an embodiment, the mounting plate (6), specifically its clip member, will press the electrical and/or data wire connector (2) until it is fully connected. Finally, in an embodiment, fastening means will join the mounting plate (6) and the mirror actuator (8).

In contrast, in the embodiment shown in figures 3 to 5, the mounting plate (6) is assembled to the rear-view mirror actuator (8) and afterwards the electrical and/or data wire connector (2) is assembled into the receptacle (10) through the first portion (1.1) of the first opening (1). The assembly will be completed when clipping is performed.

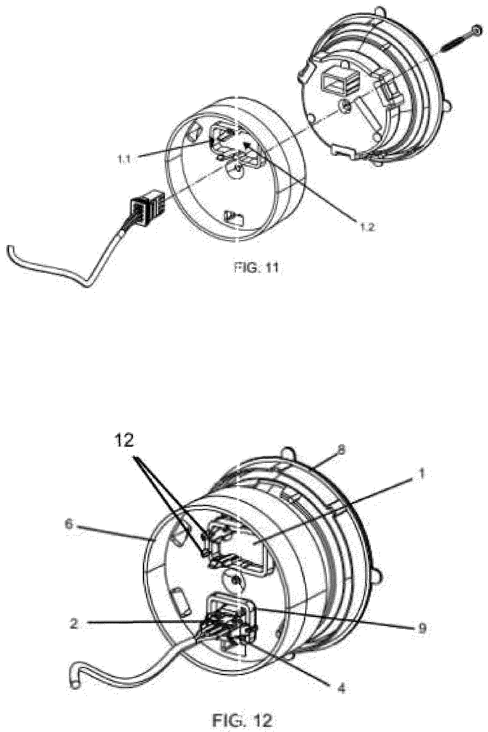

Figure 12 discloses another embodiment in which the connector system comprises:
- a second opening (9) configured to receive a second electrical and/or data wire connector (2), the second opening (9) being located in the mounting plate (6). In an embodiment, the second electrical and/or data wire connector (2) has an external shape and/or dimensions different from the first electrical and/or data wire connector (2), and
- an additional clip member, the first portion (4) of the additional clip member being joined adjacent to the edge of the second opening (9).

Therefore, the embodiment shown in figures 12 to 17 is able for two different kinds of electrical and/or data wire connector (2). More specifically, for openings (1, 9) with different shapes, only the appropriate opening (1, 9) has to be aligned to the receptacle (10). The two openings (1, 9) are arranged on a same circumference, for instance with the centre at the centre of the mounting plate (6) so that when the mirror actuator (8) or the mounting plate (6) is rotated, the corresponding opening (1, 9) can be aligned with the receptacle (10).

In the shown embodiment, the first opening (1) and the second opening (9) are located diametrically opposed to each other in the mounting plate (6).

The second opening (9) is intended for connecting a second type of electrical and/or data wire connector (2). These embodiments may be useful for two different versions of the same electrical and/or data wire connector (2) having different sizes. As an example, these two versions are named memory and basic. Due to the difference in dimensions in at least its width, length or depth between these two connectors, the first opening (1) does not guarantee poka yoke for both connectors.

According to the above, to solve this, a second window is opened in the same mounting plate (6) at, for instance, 180º from first window, and an additional clip member is added to guarantee a poka yoke functional capability for more than one design of electrical and/or data wire connector (2). Thus, the mounting plate (6) can be easily adapted to hold any of these at least two types of connectors by just turning the mounting plate (6) confronting the receptacle (10) with the required first or second opening (1, 9).

In the shown embodiment, the second opening (9) also comprises an additional clip member comprising:
- a first portion (4) having a longitudinal direction parallel to the connection direction of the electrical and/or data wire connector (2) and comprising a first longitudinal end (4.1) joined adjacent to the edge of the first opening (1) and a second longitudinal end (4.2) opposite to the first longitudinal end (4.1), and
- a second portion (5) located at the second longitudinal end (4.2) of the first portion (4) and forming an angle with the first portion (4), the second portion (5) being configured to avoid the longitudinal movement of the electrical and/or data wire connector (2) in a direction opposite to the connection direction.

Thus, in the embodiment shown in figure 12, the assembly method comprises the steps of locating the mounting plate (6) adjacent to the rear-view mirror actuator (8) and afterwards introducing the electrical and/or data wire connector (2) into the opening (1, 9) to connect to the receptacle (10).

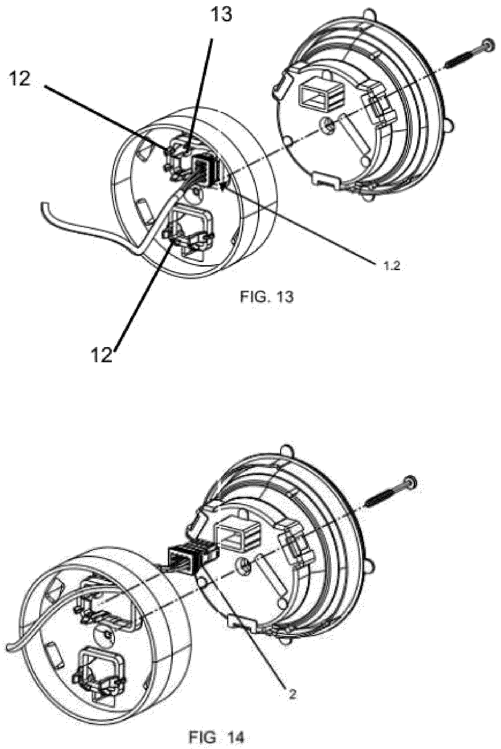

Figures 13 to 16 represent an alternative assembly process which comprises the steps of:
- passing the electrical and/or data wire connector (2) through the second opening portion (1.2),
- assembling the electrical and/or data wire connector (2) into the first opening portion (1.1) of the mounting plate (6).

In a further embodiment, it also comprises the step of assembling the mounting plate (6) and the mirror actuator (8) so that the electrical and/or data wire connector (2) is connected into the receptacle (10).

Therefore, the electrical and/or data wire connector (2) goes through the first opening (1), specifically through its second portion (1.2) rotated 90º with respect to the assembled position of the electrical and/or data wire connector (2). Afterwards, in figure 14, the electrical and/or data wire connector (2) is rotated 90º and goes backward to the mounting plate (6) to be in contact with the clip member of the first portion (1.1) of the first opening (1). Finally, the mounting plate (6) together with the electrical and/or data wire connector (2) are ensembled to the mirror actuator (8).

Thus, the invention, in some embodiments, provides the possibility to place the electrical and/or data wire connector (2) at the mounting plate (6), creating a pre-assembly for further connection to the receptacle (10) for the electrical and/or data wire connector (2).

In this sense, it is possible to be able to make the connection with the lightest possible product, assembling the electrical and/or data wire connector (2) to the mounting plate (6) and delaying the connection to the receptacle (10) as late as possible during the assembly process.

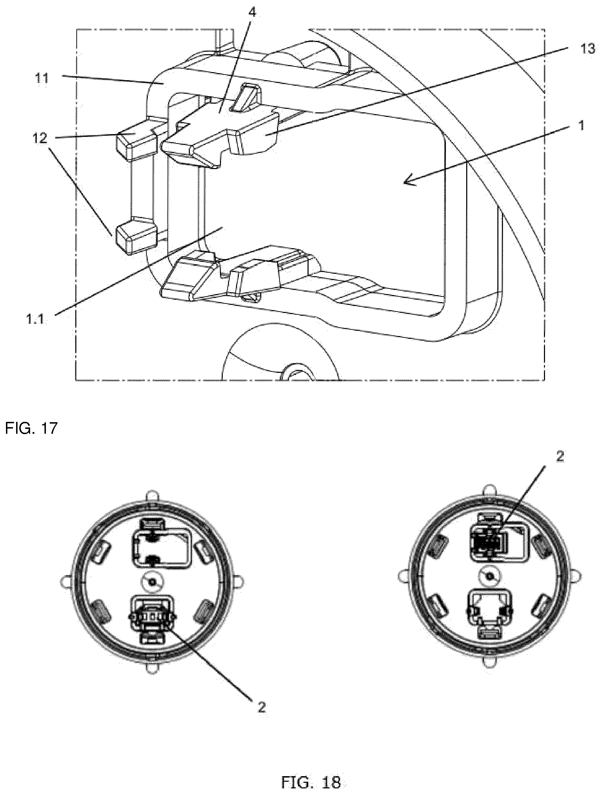

In an embodiment, in order to collaborate in the location of the electrical and/or data wire connector (2) into the first opening (1), the connector system comprises at least a protuberance (12) joint to the first opening (1). In the embodiment shown in figures 12 to 17, the protuberance (12) is specifically joined to the first portion (1.1) of the first opening (1). The protuberance (12) comprises at least a longitudinal element, in the shown embodiment, see for instance, figure 17, two longitudinal elements, located in a portion of the first opening (1), for instance in a portion of the wall (11), perpendicular to the portion of the wall (11) in which the clip member is located.

Figures 12 to 17 disclose also an embodiment in which the clip member comprises means for temporarily retaining the electrical and/or data wire connector (2) into the first opening (1) during assembly of the connector system or during transportation. Particularly, the first portion (4) of the clip member comprises a protrusion (13), for instance, made of a plastic material, that helps to hold the electrical and/or data wire connector (2). In an embodiment, see for instance figure 17, the protrusion (13) may be located such that the electrical and/or data wire connector (2) is hold between the protrusion (13) and the wall (11) of the opening (1) or between respective two protrusions (13) of two clip members. In the shown embodiment, the protrusion (13) extends longitudinally along the first portion (4) of the clip member.

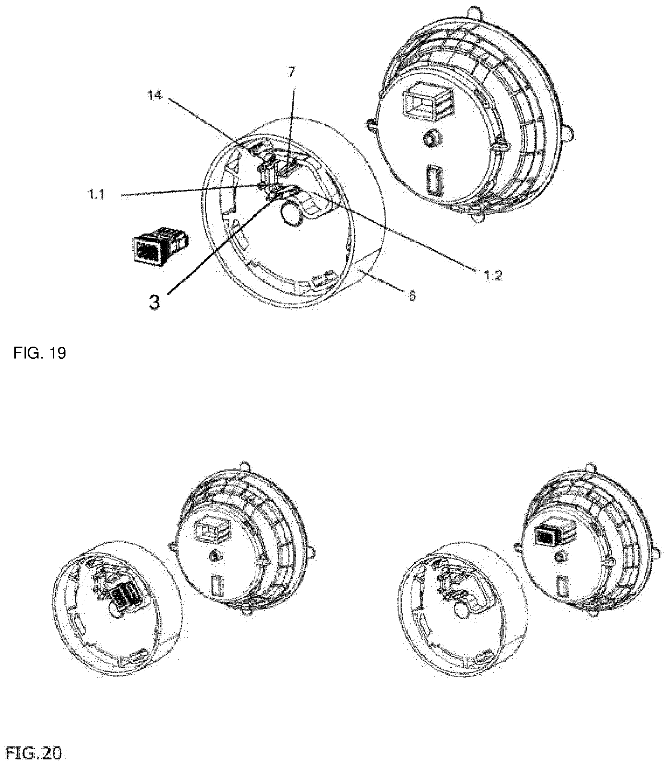

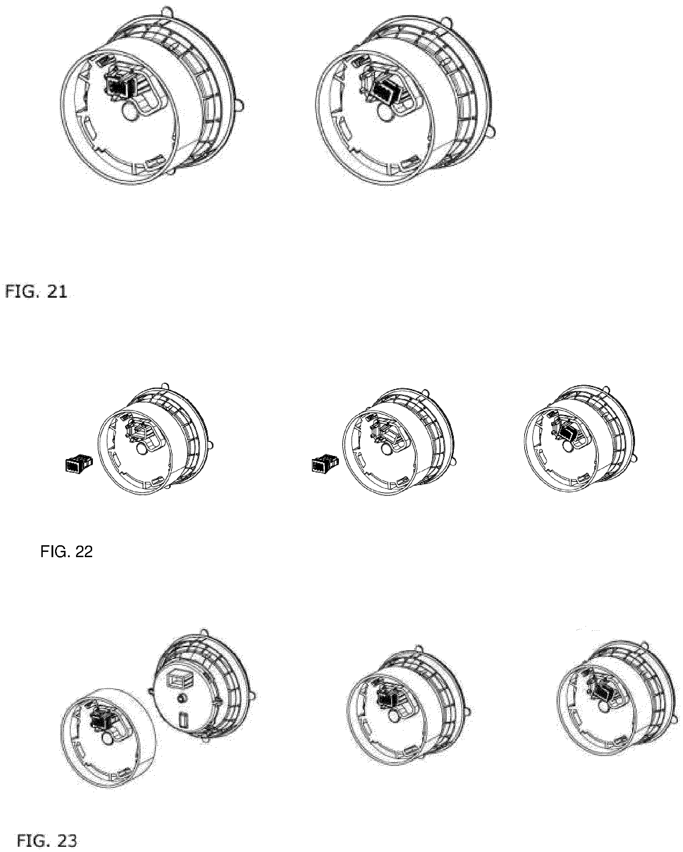

Figures 19 to 23 disclose an additional embodiment in which the connector system comprises a third clip member (14). This embodiment is useful in a bayonet mount between the mirror actuator (8) and the mounting plate (6) in which the elements are relatively rotated to achieve an assembled state.

Preferably, two of the clip members (7, 14) are located opposite to the other clip member (3) in relation to the first opening (1). The electrical and/or data wire connector (2) is received among the three clip members (3, 7, 14) in a first position or assembly step.

In an embodiment, the third clip member (14) contacts the electrical and/or data wire connector (2) in a first position. This third clip member (14) acts as a holder of the electrical and/or data wire connector (2) when in the first position. Thus, the third clip member (14) acts as the protrusion (13) disclosed in the previous embodiment helping to hold the electrical and/or data wire connector (2) in place.

The second clip member (7) and the fist clip member (3) could be in contact with electrical and/or data wire connector (2) in a first position. Alternatively, first and second clip member (3, 7) are not in contact with the electrical and/or data wire connector (2) in said first position.

In this embodiment, the first opening (1) of the connector system comprises a first opening portion (1.1) and a second opening portion (1.2). The first opening portion (1.1) and the second opening portion (1.2) are configured to receive the electrical and/or data wire connector (2). In the shown embodiment, the first opening portion (1.1) comprises the clip members (3, 7, 14).

In a first position or assembly step of the shown embodiments, the first opening portion (1.1) is configured to be located in correspondence with the receptacle (10). Afterwards, the mounting plate (6) or the mirror actuator (8) are configured to be rotated so that the second opening portion (1.2) is located in correspondence with the receptacle (10), fully or in part. In the shown embodiment, the receptacle (10) ends between the first opening portion (1.1) and the second opening portion (1.2).

The first opening portion (1.1) and the second opening portion (1.2) are located following a same circumference in the mounting plate (6), so that the above- mentioned transition from the first opening portion (1.1) towards the second opening portion (1.2) can be made. The first opening portion (1.1) and the second opening portion (1.2) may be curved and located in a circumferential arrangement. In the shown embodiment both portions (1.1, 1.2) are located at an angle between 120º and 150º.

In the shown embodiment, the first clip member (3) is located in the side of the first opening portion (1.1) closest to the centre of the mounting plate (6) and the second clip member (7) and the third clip member are located in the side of the first opening portion (1.1) furthest from the centre of the mounting plate (6). In the shown embodiment, the first clip member (3), the second clip member (7) and the third clip member (14) are located in a staggered pattern.

In the second position or second assembly step, only the two clip members (3, 7) closest to the second opening portion (1.2) receive the electrical and/or data wire connector (2).

All the different assembly methods described for the previous embodiments apply to the embodiment of figure 19 as can be seen in figures 20 to 23.

It is also an object of the present invention a rear- view mirror for motor vehicles that comprises a connector system according to the above.

## Claims

1. Connector system of a rear-view mirror regulation system, being configured to be located in correspondence with at least a receptacle (10) of an electrical and/or data wire connector (2), the receptacle (10) being located in a rear-view mirror actuator (8), the connector system comprises:
- at least a first opening (1) configured to provide access to the receptacle (10) for the electrical and/or data wire connector (2), and
- a clip member configured to receive the electrical and/or data wire connector (2) and comprising:
- a first portion (4) having a longitudinal direction parallel to a connection direction of the electrical and/or data wire connector (2) into the receptacle (10) and comprising a first longitudinal end (4.1) joined adjacent to the edge of the first opening (1) and a second longitudinal end (4.2) opposite to the first longitudinal end (4.1), and
- a second portion (5) located at the second longitudinal end (4.2) of the first portion (4) and forming an angle with the first portion (4), **characterised in that** the clip member being configured to be located on a side of the first opening (1) opposite to the side configured to face the mirror actuator (8) ,and **in that**
the second portion (5) being configured to avoid the longitudinal movement of the electrical and/or data wire connector (2) in a direction opposite to the connection direction.

2. Connector system of a rear-view mirror regulation system, according to claim 1, wherein the second longitudinal end (4.2) is movable by the electrical and/or data wire connector (2) so as to be received in the clip member.

3. Connector system of a rear-view mirror regulation system, according to any preceding claim, comprising a mounting plate (6) being configured to be located in correspondence with the receptacle (10) of the electrical and/or data wire connector (2), the first opening (1) being located in the mounting plate (6).

4. Connector system of a rear-view mirror regulation system, according to any preceding claim, wherein it comprises a first clip member (3) and a second clip member (7) located opposite to each other in relation to the first opening (1) and comprising both the first portion (4) and the second portion (5) so that the electrical and/or data wire connector (2) is received between the first clip member (3) and the second clip member (7).

5. Connector system of a rear-view mirror regulation system, according to claim 3 or claims 4 and 3, wherein it comprises:
- a second opening (9) configured to receive a second electrical and/or data wire connector (2), the second opening (9) being located in the mounting plate (6), and
- an additional clip member, the first portion (4) of the additional clip member being joined adjacent to the edge of the second opening (9).

6. Connector system of a rear-view mirror regulation system, according to claim 5, wherein the first opening (1) and the second opening (9) are in the mounting plate (6) in a same circumference, the mounting plate (6) or the mirror actuator (8) being configured to be rotated so that the first opening (1) or the second opening (9) is located in correspondence with the receptacle (10).

7. Connector system of a rear-view mirror regulation system, according to any preceding claim, wherein the first opening (1) comprises a first opening portion (1.1) and a second opening portion (1.2), the first opening portion (1.1) and the second opening portion (1.2) being configured to receive the electrical and/or data wire connector (2) and the first opening portion (1.1) comprising the clip member and being configured to be located in use in correspondence with the receptacle (10) to provide access for the electrical and/or data wire connector (2).

8. Connector system of a rear-view mirror regulation system, according to claim 7, wherein the effective area of first opening portion (1.1) is smaller than the effective area of the second opening portion (1.2).

9. Connector system of a rear-view mirror regulation system, according to any preceding claim, wherein the first opening (1) comprises a wall (11) parallel to the connection direction and configured to limit the position of the electrical and/or data wire connector (2) in a transversal direction to the connection direction.

10. A rear-view mirror regulation system for motor vehicles, **characterised in that** it comprises:
- a rear-view mirror actuator (8) comprising a receptacle (10) of an electrical and/or data wire connector (2),
- a connector system according to any preceding claim being configured to be located in correspondence with the receptacle (10).

11. Assembly method of a connector system of a rear-view mirror regulation system, the connector system being configured according to any preceding claim 1 to 9, the assembly method comprising the step of introducing the electrical and/or data wire connector (2) into the opening (1, 9) so that the clip member receives and avoids the longitudinal movement of the electrical and/or data wire connector (2) in a direction opposite to the connection direction.

12. Assembly method of a connector system of a rear-view mirror regulation system, according to claim 11, wherein the connector system is configured to be located in correspondence with at least a receptacle (10) of an electrical and/or data wire connector (2), the receptacle (10) being located in a rear-view mirror actuator (8), the connector system comprising:
- at least a first opening (1) configured to provide access to the receptacle (10) for the electrical and/or data wire connector (2),
- a mounting plate (6) being configured to be located in correspondence with the receptacle (10) of the electrical and/or data wire connector (2) the first opening (1) being located in the mounting plate (6), and
- a clip member configured to receive the electrical and/or data wire connector (2), the clip member being configured to be located on a side of the first opening (1) opposite to the side configured to face the mirror actuator (8) and comprising:
- a first portion (4) having a longitudinal direction parallel to a connection direction of the electrical and/or data wire connector (2) into the receptacle (10) and comprising a first longitudinal end (4.1) joined adjacent to the edge of the first opening (1) and a second longitudinal end (4.2) opposite to the first longitudinal end (4.1), and
- a second portion (5) located at the second longitudinal end (4.2) of the first portion (4) and forming an angle with the first portion (4), the second portion (5) being configured to avoid the longitudinal movement of the electrical and/or data wire connector (2) in a direction opposite to the connection direction;
- a second opening (9) configured to receive a second electrical and/or data wire connector (2), the second opening (9) being located in the mounting plate (6); and
- an additional clip member, the first portion (4) of the additional clip member being joined adjacent to the edge of the second opening (9),
wherein the mounting plate (6) and the rear-view mirror actuator (8) are assembled and afterwards the electrical and/or data wire connector (2) is connected to the receptacle (10) through the opening (1, 9).

13. Assembly method of a connector system of a rear-view mirror regulation system, according to claim 11, wherein the connector system is configured to be located in correspondence with at least a receptacle (10) of an electrical and/or data wire connector (2), the receptacle (10) being located in a rear-view mirror actuator (8), the connector system comprising, the connector system comprising:
- at least a first opening (1) configured to provide access to the receptacle (10) for the electrical and/or data wire connector (2),
- a mounting plate (6) being configured to be located in correspondence with the receptacle (10) of the electrical and/or data wire connector (2) the first opening (1) being located in the mounting plate (6), and
- a clip member configured to receive the electrical and/or data wire connector (2), the clip member being configured to be located on a side of the first opening (1) opposite to the side configured to face the mirror actuator (8) and comprising:
- a first portion (4) having a longitudinal direction parallel to a connection direction of the electrical and/or data wire connector (2) into the receptacle (10) and comprising a first longitudinal end (4.1) joined adjacent to the edge of the first opening (1) and a second longitudinal end (4.2) opposite to the first longitudinal end (4.1), and
- a second portion (5) located at the second longitudinal end (4.2) of the first portion (4) and forming an angle with the first portion (4), the second portion (5) being configured to avoid the longitudinal movement of the electrical and/or data wire connector (2) in a direction opposite to the connection direction;
and the method comprising the steps of:
- connecting the electrical and/or data wire connector (2) into the receptacle (10), and afterwards
- assembling the mounting plate (6) and the mirror actuator (8) so that the clip member receives the electrical and/or data wire connector (2).

14. Assembly method of a connector system of a rear-view mirror regulation system, according to claim 11, wherein the connector system is configured to be located in correspondence with at least a receptacle (10) of an electrical and/or data wire connector (2), the receptacle (10) being located in a rear-view mirror actuator (8), the connector system comprising:
- at least a first opening (1) configured to provide access to the receptacle (10) for the electrical and/or data wire connector (2),
- a mounting plate (6) being configured to be located in correspondence with the receptacle (10) of the electrical and/or data wire connector (2) the first opening (1) being located in the mounting plate (6), and
- a clip member configured to receive the electrical and/or data wire connector (2), the clip member being configured to be located on a side of the first opening (1) opposite to the side configured to face the mirror actuator (8) and comprising:
- a first portion (4) having a longitudinal direction parallel to a connection direction of the electrical and/or data wire connector (2) into the receptacle (10) and comprising a first longitudinal end (4.1) joined adjacent to the edge of the first opening (1) and a second longitudinal end (4.2) opposite to the first longitudinal end (4.1), and
- a second portion (5) located at the second longitudinal end (4.2) of the first portion (4) and forming an angle with the first portion (4), the second portion (5) being configured to avoid the longitudinal movement of the electrical and/or data wire connector (2) in a direction opposite to the connection direction;
- the first opening (1) comprising a first opening portion (1.1) and a second opening portion (1.2), the first opening portion (1.1) and the second opening portion (1.2) being configured to receive the connector (2), and the first opening portion (1.1) comprising the clip member and being configured to be located in correspondence with the receptacle (10) to provide access for the electrical and/or data wire connector (2), wherein the connection method comprises, in sequence, the steps of:
- passing the electrical and/or data wire connector (2) through the second opening portion (1.2).
- connecting the electrical and/or data wire connector (2) into the receptacle (10),
- assembling the mounting plate (6) and the mirror actuator (8) so that the clip member receives the electrical and/or data wire connector (2).

15. Assembly method of a connector system of a rear-view mirror regulation system, according to claim 11, wherein the connector system is configured to be located in correspondence with at least a receptacle (10) of an electrical and/or data wire connector (2), the receptacle (10) being located in a rear-view mirror actuator (8), the connector system comprising:
- at least a first opening (1) configured to provide access to the receptacle (10) for the electrical and/or data wire connector (2),
- a mounting plate (6) being configured to be located in correspondence with the receptacle (10) of the electrical and/or data wire connector (2) the first opening (1) being located in the mounting plate (6), and
- a clip member configured to receive the electrical and/or data wire connector (2), the clip member being configured to be located on a side of the first opening (1) opposite to the side configured to face the mirror actuator (8) and comprising:
- a first portion (4) having a longitudinal direction parallel to a connection direction of the electrical and/or data wire connector (2) into the receptacle (10) and comprising a first longitudinal end (4.1) joined adjacent to the edge of the first opening (1) and a second longitudinal end (4.2) opposite to the first longitudinal end (4.1), and
- a second portion (5) located at the second longitudinal end (4.2) of the first portion (4) and forming an angle with the first portion (4), the second portion (5) being configured to avoid the longitudinal movement of the electrical and/or data wire connector (2) in a direction opposite to the connection direction;
- the first opening (1) comprising a first opening portion (1.1) and a second opening portion (1.2), the first opening portion (1.1) and the second opening portion (1.2) being configured to receive the connector (2), and the first opening portion (1.1) comprising the clip member and being configured to be located in correspondence with the receptacle (10) to provide access for the electrical and/or data wire connector (2),
- and wherein the connection method comprises the steps of:passing the electrical and/or data wire connector (2) through the second opening portion (1.2),
- introducing the electrical and/or data wire connector (2) into the first opening portion (1.1) of the mounting plate (6).

## Patentansprüche

1. Verbindungssystem eines Rückspiegelregelungssystems, das konfiguriert ist, um in Entsprechung zu mindestens einer Aufnahme (10) eines elektrischen und/oder Datenkabelsteckverbinders (2) angeordnet zu sein, wobei sich die Aufnahme (10) in einem Rückspiegelaktuator (8) befindet, wobei das Verbindungssystem umfasst:
- mindestens eine erste Öffnung (1), die konfiguriert ist, um dem elektrischen und/oder Datenkabelsteckverbinder (2) Zugang zu der Aufnahme (10) bereitzustellen, und
- ein Klemmelement, das konfiguriert ist, um den elektrischen und/oder Datenkabelsteckverbinder (2) aufzunehmen, und das umfasst:
- einen ersten Abschnitt (4), der eine Längsrichtung parallel zu einer Verbindungsrichtung des elektrischen und/oder Datenkabelsteckverbinders (2) in die Aufnahme (10) aufweist und ein erstes Längsende (4.1), das angrenzend an den Rand der ersten Öffnung (1) verbunden ist, und ein dem ersten Längsende (4.1) gegenüberliegendes zweites Längsende (4.2) umfasst, und
- einen zweiten Abschnitt (5), der sich an dem zweiten Längsende (4.2) des ersten Abschnitts (4) befindet und einen Winkel mit dem ersten Abschnitt (4) bildet, **dadurch gekennzeichnet, dass** das Klemmelement konfiguriert ist, um auf einer Seite der ersten Öffnung (1) gegenüber der Seite angeordnet zu sein, die konfiguriert ist, um dem Spiegelaktuator (8) zugewandt zu sein, und dadurch, dass der zweite Abschnitt (5) konfiguriert ist, um die Längsbewegung des elektrischen und/oder Datenkabelsteckverbinders (2) in einer Richtung entgegengesetzt zur Verbindungsrichtung zu verhindern.

2. Verbindungssystem eines Rückspiegelregelungssystems nach Anspruch 1, wobei das zweite Längsende (4.2) durch den elektrischen und/oder Datenkabelsteckverbinder (2) bewegbar ist, um in dem Klemmelement aufgenommen zu werden.

3. Verbindungssystem eines Rückspiegelregelungssystems nach einem der vorhergehenden Ansprüche, umfassend eine Montageplatte (6), die konfiguriert ist, um in Entsprechung zu der Aufnahme (10) des elektrischen und/oder Datenkabelsteckverbinders (2) angeordnet zu sein, wobei sich die erste Öffnung (1) in der Montageplatte (6) befindet.

4. Verbindungssystem eines Rückspiegelregelungssystems nach einem der vorhergehenden Ansprüche, wobei es ein erstes Klemmelement (3) und ein zweites Klemmelement (7) umfasst, die in Bezug auf die erste Öffnung (1) einander gegenüberliegend angeordnet sind und beide den ersten Abschnitt (4) und den zweiten Abschnitt (5) umfassen, sodass der elektrische und/oder Datenkabelsteckverbinder (2) zwischen dem ersten Klemmelement (3) und dem zweiten Klemmelement (7) aufgenommen ist.

5. Verbindungssystem eines Rückspiegelregelungssystems nach Anspruch 3 oder den Ansprüchen 4 und 3, wobei es umfasst:
- eine zweite Öffnung (9), die konfiguriert ist, um einen zweiten elektrischen und/oder Datenkabelsteckverbinder (2) aufzunehmen, wobei sich die zweite Öffnung (9) in der Montageplatte (6) befindet, und
- ein zusätzliches Klemmelement, wobei der erste Abschnitt (4) des zusätzlichen Klemmelements angrenzend an den Rand der zweiten Öffnung (9) verbunden ist.

6. Verbindungssystem eines Rückspiegelregelungssystems nach Anspruch 5, wobei sich die erste Öffnung (1) und die zweite Öffnung (9) in der Montageplatte (6) auf einem gleichen Umfang befinden, wobei die Montageplatte (6) oder der Spiegelaktuator (8) konfiguriert ist, um so gedreht zu werden, dass sich die erste Öffnung (1) oder die zweite Öffnung (9) in Entsprechung zu der Aufnahme (10) befindet.

7. Verbindungssystem eines Rückspiegelregelungssystems nach einem der vorhergehenden Ansprüche, wobei die erste Öffnung (1) einen ersten Öffnungsabschnitt (1.1) und einen zweiten Öffnungsabschnitt (1.2) umfasst, wobei der erste Öffnungsabschnitt (1.1) und der zweite Öffnungsabschnitt (1.2) konfiguriert sind, um den elektrischen und/oder Datenkabelsteckverbinder (2) aufzunehmen, und der erste Öffnungsabschnitt (1.1) das Klemmelement umfasst und konfiguriert ist, um im Gebrauch in Entsprechung zu der Aufnahme (10) angeordnet zu sein, um Zugang für den elektrischen und/oder Datenkabelsteckverbinder (2) bereitzustellen.

8. Verbindungssystem eines Rückspiegelregelungssystems nach Anspruch 7, wobei die effektive Fläche des ersten Öffnungsabschnitts (1.1) kleiner ist als die effektive Fläche des zweiten Öffnungsabschnitts (1.2).

9. Verbindungssystem eines Rückspiegelregelungssystems nach einem der vorhergehenden Ansprüche, wobei die erste Öffnung (1) eine Wand (11) parallel zu der Verbindungsrichtung umfasst und konfiguriert ist, um die Position des elektrischen und/oder Datenkabelsteckverbinders (2) in einer Querrichtung zu der Verbindungsrichtung zu begrenzen.

10. Rückspiegelregelungssystem für Kraftfahrzeuge, **dadurch gekennzeichnet, dass** es umfasst:
- einen Rückspiegelaktuator (8), umfassend eine Aufnahme (10) eines elektrischen und/oder Datenkabelsteckverbinders (2),
- ein Verbindungssystem nach einem der vorhergehenden Ansprüche, das konfiguriert ist, um in Entsprechung zu der Aufnahme (10) angeordnet zu sein.

11. Montageverfahren eines Verbindungssystems eines Rückspiegelregelungssystems, wobei das Verbindungssystem nach einem der vorhergehenden Ansprüche 1 bis 9 konfiguriert ist, wobei das Montageverfahren den Schritt des Einführens des elektrischen und/oder Datenkabelsteckverbinders (2) in die Öffnung (1, 9) umfasst, sodass das Klemmelement den elektrischen und/oder Datenkabelsteckverbinder (2) aufnimmt und dessen Längsbewegung in einer Richtung entgegengesetzt zu der Verbindungsrichtung verhindert.

12. Montageverfahren eines Verbindungssystems eines Rückspiegelregelungssystems nach Anspruch 11, wobei das Verbindungssystem konfiguriert ist, um in Entsprechung zu mindestens einer Aufnahme (10) eines elektrischen und/oder Datenkabelsteckverbinders (2) angeordnet zu sein, wobei sich die Aufnahme (10) in einem Rückspiegelaktuator (8) befindet, wobei das Verbindungssystem umfasst:
- mindestens eine erste Öffnung (1), die konfiguriert ist, um dem elektrischen und/oder Datenkabelsteckverbinder (2) Zugang zu der Aufnahme (10) bereitzustellen,
- eine Montageplatte (6), die konfiguriert ist, um in Entsprechung zu der Aufnahme (10) des elektrischen und/oder Datenkabelsteckverbinders (2) angeordnet zu sein, wobei sich die erste Öffnung (1) in der Montageplatte (6) befindet, und
- ein Klemmelement, das konfiguriert ist, um den elektrischen und/oder Datenkabelsteckverbinder (2) aufzunehmen, wobei das Klemmelement konfiguriert ist, um auf einer Seite der ersten Öffnung (1) gegenüber der Seite angeordnet zu sein, die konfiguriert ist, um dem Spiegelaktuator (8) zugewandt zu sein, und umfassend:
- einen ersten Abschnitt (4), der eine Längsrichtung parallel zu einer Verbindungsrichtung des elektrischen und/oder Datenkabelsteckverbinders (2) in die Aufnahme (10) aufweist und ein erstes Längsende (4.1), das angrenzend an den Rand der ersten Öffnung (1) verbunden ist, und ein dem ersten Längsende (4.1) gegenüberliegendes zweites Längsende (4.2) umfasst, und
- einen zweiten Abschnitt (5), der sich an dem zweiten Längsende (4.2) des ersten Abschnitts (4) befindet und einen Winkel mit dem ersten Abschnitt (4) bildet, wobei der zweite Abschnitt (5) konfiguriert ist, um die Längsbewegung des elektrischen und/oder Datenkabelsteckverbinders (2) in einer Richtung entgegengesetzt zur Verbindungsrichtung zu verhindern;
- eine zweite Öffnung (9), die konfiguriert ist, um einen zweiten elektrischen und/oder Datenkabelsteckverbinder (2) aufzunehmen, wobei sich die zweite Öffnung (9) in der Montageplatte (6) befindet; und
- ein zusätzliches Klemmelement, wobei der erste Abschnitt (4) des zusätzlichen Klemmelements angrenzend an den Rand der zweiten Öffnung (9) verbunden ist,
wobei die Montageplatte (6) und der Rückspiegelaktuator (8) montiert werden und danach der elektrische und/oder Datenkabelsteckverbinder (2) durch die Öffnung (1, 9) mit der Aufnahme (10) verbunden wird.

13. Montageverfahren eines Verbindungssystems eines Rückspiegelregelungssystems nach Anspruch 11, wobei das Verbindungssystem konfiguriert ist, um in Entsprechung zu mindestens einer Aufnahme (10) eines elektrischen und/oder Datenkabelsteckverbinders (2) angeordnet zu sein, wobei sich die Aufnahme (10) in einem Rückspiegelaktuator (8) befindet, wobei das Verbindungssystem umfasst, wobei das Verbindungssystem umfasst:
- mindestens eine erste Öffnung (1), die konfiguriert ist, um dem elektrischen und/oder Datenkabelsteckverbinder (2) Zugang zu der Aufnahme (10) bereitzustellen,
- eine Montageplatte (6), die konfiguriert ist, um in Entsprechung zu der Aufnahme (10) des elektrischen und/oder Datenkabelsteckverbinders (2) angeordnet zu sein, wobei sich die erste Öffnung (1) in der Montageplatte (6) befindet, und
- ein Klemmelement, das konfiguriert ist, um den elektrischen und/oder Datenkabelsteckverbinder (2) aufzunehmen, wobei das Klemmelement konfiguriert ist, um auf einer Seite der ersten Öffnung (1) gegenüber der Seite angeordnet zu sein, die konfiguriert ist, um dem Spiegelaktuator (8) zugewandt zu sein, und umfassend:
- einen ersten Abschnitt (4), der eine Längsrichtung parallel zu einer Verbindungsrichtung des elektrischen und/oder Datenkabelsteckverbinders (2) in die Aufnahme (10) aufweist und ein erstes Längsende (4.1), das angrenzend an den Rand der ersten Öffnung (1) verbunden ist, und ein dem ersten Längsende (4.1) gegenüberliegendes zweites Längsende (4.2) umfasst, und
- einen zweiten Abschnitt (5), der sich an dem zweiten Längsende (4.2) des ersten Abschnitts (4) befindet und einen Winkel mit dem ersten Abschnitt (4) bildet, wobei der zweite Abschnitt (5) konfiguriert ist, um die Längsbewegung des elektrischen und/oder Datenkabelsteckverbinders (2) in einer Richtung entgegengesetzt zur Verbindungsrichtung zu verhindern;
und wobei das Verfahren die Schritte umfasst:
- Verbinden des elektrischen und/oder Datenkabelsteckverbinders (2) in die Aufnahme (10), und danach
- Montieren der Montageplatte (6) und des Spiegelaktuators (8), sodass das Klemmelement den elektrischen und/oder Datenkabelsteckverbinder (2) aufnimmt.

14. Montageverfahren eines Verbindungssystems eines Rückspiegelregelungssystems nach Anspruch 11, wobei das Verbindungssystem konfiguriert ist, um in Entsprechung zu mindestens einer Aufnahme (10) eines elektrischen und/oder Datenkabelsteckverbinders (2) angeordnet zu sein, wobei sich die Aufnahme (10) in einem Rückspiegelaktuator (8) befindet, wobei das Verbindungssystem umfasst:
- mindestens eine erste Öffnung (1), die konfiguriert ist, um dem elektrischen und/oder Datenkabelsteckverbinder (2) Zugang zu der Aufnahme (10) bereitzustellen,
- eine Montageplatte (6), die konfiguriert ist, um in Entsprechung zu der Aufnahme (10) des elektrischen und/oder Datenkabelsteckverbinders (2) angeordnet zu sein, wobei sich die erste Öffnung (1) in der Montageplatte (6) befindet, und
- ein Klemmelement, das konfiguriert ist, um den elektrischen und/oder Datenkabelsteckverbinder (2) aufzunehmen, wobei das Klemmelement konfiguriert ist, um auf einer Seite der ersten Öffnung (1) gegenüber der Seite angeordnet zu sein, die konfiguriert ist, um dem Spiegelaktuator (8) zugewandt zu sein, und umfassend:
- einen ersten Abschnitt (4), der eine Längsrichtung parallel zu einer Verbindungsrichtung des elektrischen und/oder Datenkabelsteckverbinders (2) in die Aufnahme (10) aufweist und ein erstes Längsende (4.1), das angrenzend an den Rand der ersten Öffnung (1) verbunden ist, und ein dem ersten Längsende (4.1) gegenüberliegendes zweites Längsende (4.2) umfasst, und
- einen zweiten Abschnitt (5), der sich an dem zweiten Längsende (4.2) des ersten Abschnitts (4) befindet und einen Winkel mit dem ersten Abschnitt (4) bildet, wobei der zweite Abschnitt (5) konfiguriert ist, um die Längsbewegung des elektrischen und/oder Datenkabelsteckverbinders (2) in einer Richtung entgegengesetzt zur Verbindungsrichtung zu verhindern;
- wobei die erste Öffnung (1) einen ersten Öffnungsabschnitt (1.1) und einen zweiten Öffnungsabschnitt (1.2) umfasst, wobei der erste Öffnungsabschnitt (1.1) und der zweite Öffnungsabschnitt (1.2) konfiguriert sind, um den Verbinder (2) aufzunehmen, und der erste Öffnungsabschnitt (1.1) das Klemmelement umfasst und konfiguriert ist, um in Entsprechung zu der Aufnahme (10) angeordnet zu sein, um Zugang für den elektrischen und/oder Datenkabelsteckverbinder (2) bereitzustellen,
wobei das Verbindungsverfahren nacheinander die Schritte umfasst:
- Führen des elektrischen und/oder Datenkabelsteckverbinders (2) durch den zweiten Öffnungsabschnitt (1.2).
- Verbinden des elektrischen und/oder Datenkabelsteckverbinders (2) in die Aufnahme (10),
- Montieren der Montageplatte (6) und des Spiegelaktuators (8), sodass das Klemmelement den elektrischen und/oder Datenkabelsteckverbinder (2) aufnimmt.

15. Montageverfahren eines Verbindungssystems eines Rückspiegelregelungssystems nach Anspruch 11, wobei das Verbindungssystem konfiguriert ist, um in Entsprechung zu mindestens einer Aufnahme (10) eines elektrischen und/oder Datenkabelsteckverbinders (2) angeordnet zu sein, wobei sich die Aufnahme (10) in einem Rückspiegelaktuator (8) befindet, wobei das Verbindungssystem umfasst:
- mindestens eine erste Öffnung (1), die konfiguriert ist, um dem elektrischen und/oder Datenkabelsteckverbinder (2) Zugang zu der Aufnahme (10) bereitzustellen,
- eine Montageplatte (6), die konfiguriert ist, um in Entsprechung zu der Aufnahme (10) des elektrischen und/oder Datenkabelsteckverbinders (2) angeordnet zu sein, wobei sich die erste Öffnung (1) in der Montageplatte (6) befindet, und
- ein Klemmelement, das konfiguriert ist, um den elektrischen und/oder Datenkabelsteckverbinder (2) aufzunehmen, wobei das Klemmelement konfiguriert ist, um auf einer Seite der ersten Öffnung (1) gegenüber der Seite angeordnet zu sein, die konfiguriert ist, um dem Spiegelaktuator (8) zugewandt zu sein, und umfassend:
- einen ersten Abschnitt (4), der eine Längsrichtung parallel zu einer Verbindungsrichtung des elektrischen und/oder Datenkabelsteckverbinders (2) in die Aufnahme (10) aufweist und ein erstes Längsende (4.1), das angrenzend an den Rand der ersten Öffnung (1) verbunden ist, und ein dem ersten Längsende (4.1) gegenüberliegendes zweites Längsende (4.2) umfasst, und
- einen zweiten Abschnitt (5), der sich an dem zweiten Längsende (4.2) des ersten Abschnitts (4) befindet und einen Winkel mit dem ersten Abschnitt (4) bildet, wobei der zweite Abschnitt (5) konfiguriert ist, um die Längsbewegung des elektrischen und/oder Datenkabelsteckverbinders (2) in einer Richtung entgegengesetzt zur Verbindungsrichtung zu verhindern;
- wobei die erste Öffnung (1) einen ersten Öffnungsabschnitt (1.1) und einen zweiten Öffnungsabschnitt (1.2) umfasst, wobei der erste Öffnungsabschnitt (1.1) und der zweite Öffnungsabschnitt (1.2) konfiguriert sind, um den Verbinder (2) aufzunehmen, und der erste Öffnungsabschnitt (1.1) das Klemmelement umfasst und konfiguriert ist, um in Entsprechung zu der Aufnahme (10) angeordnet zu sein, um Zugang für den elektrischen und/oder Datenkabelsteckverbinder (2) bereitzustellen,
- und wobei das Verbindungsverfahren die Schritte umfasst: Führen des elektrischen und/oder Datenkabelsteckverbinders (2) durch den zweiten Öffnungsabschnitt (1.2),
- Einführen des elektrischen und/oder Datenkabelsteckverbinders (2) in den ersten Öffnungsabschnitt (1.1) der Montageplatte (6).

## Revendications

1. Système de connecteur d'un système de régulation de rétroviseur, configuré pour être situé en correspondance avec au moins une prise (10) d'un connecteur de fil électrique et/ou de données (2), la prise (10) étant située dans un actionneur de rétroviseur (8), le système de connecteur comprend :
- au moins une première ouverture (1) configurée pour fournir un accès à la prise (10) du connecteur de câble électrique et/ou de données (2), et
- un élément d'attache configuré pour recevoir le connecteur de fil électrique et/ou de données (2) et comprenant :
- une première partie (4) ayant une direction longitudinale parallèle à la direction de connexion du connecteur de fil électrique et/ou de données (2) dans la prise (10) et comprenant une première extrémité longitudinale (4.1) jointe adjacente au bord de la première ouverture (1) et une seconde extrémité longitudinale (4.2) opposée à la première extrémité longitudinale (4.1), et
- une seconde partie (5) située au niveau de la seconde extrémité longitudinale (4.2) de la première partie (4) et formant un angle avec la première partie (4), **caractérisé en ce que** l'élément d'attache est configuré pour être situé sur un côté de la première ouverture (1) opposé au côté configuré pour faire face à l'actionneur de rétroviseur (8), et **en ce que** la seconde partie (5) est configurée pour éviter le mouvement longitudinal du connecteur de fil électrique et/ou de données (2) dans une direction opposée à la direction de connexion.

2. Système de connecteur d'un système de régulation de rétroviseur, selon la revendication 1, dans lequel la seconde extrémité longitudinale (4.2) est mobile par le connecteur de fil électrique et/ou de données (2) afin d'être reçue dans l'élément d'attache.

3. Système de connecteur d'un système de régulation de rétroviseur, selon une quelconque revendication précédente, comprenant une plaque de montage (6) configurée pour être située en correspondance avec la prise (10) du connecteur de fil électrique et/ou de données (2), la première ouverture (1) étant située dans la plaque de montage (6).

4. Système de connecteur d'un système de régulation de rétroviseur, selon une quelconque revendication précédente, dans lequel il comprend un premier élément d'attache (3) et un second élément d'attache (7) situés opposés l'un à l'autre par rapport à la première ouverture (1) et comprenant à la fois la première partie (4) et la seconde partie (5) de sorte que le connecteur de fil électrique et/ou de données (2) est reçu entre le premier élément d'attache (3) et le second élément d'attache (7).

5. Système de connecteur d'un système de régulation de rétroviseur, selon la revendication 3 ou les revendications 4 et 3, dans lequel il comprend :
- une seconde ouverture (9) configurée pour recevoir un second connecteur de fil électrique et/ou de données (2), la seconde ouverture (9) étant située dans la plaque de montage (6), et
- un élément d'attache supplémentaire, la première partie (4) de l'élément d'attache supplémentaire étant jointe adjacente au bord de la seconde ouverture (9).

6. Système de connecteur d'un système de régulation de rétroviseur, selon la revendication 5, dans lequel la première ouverture (1) et la seconde ouverture (9) sont dans la plaque de montage (6) dans une même circonférence, la plaque de montage (6) ou l'actionneur de rétroviseur (8) étant configuré pour être entraîné en rotation de sorte que la première ouverture (1) ou la seconde ouverture (9) est située en correspondance avec la prise (10).

7. Système de connecteur d'un système de régulation de rétroviseur, selon une quelconque revendication précédente, dans lequel la première ouverture (1) comprend une première partie d'ouverture (1.1) et une seconde partie d'ouverture (1.2), la première partie d'ouverture (1.1) et la seconde partie d'ouverture (1.2) étant configurées pour recevoir le connecteur de fil électrique et/ou de données (2) et la première partie d'ouverture (1.1) comprenant l'élément d'attache et étant configurée pour être située en utilisation en correspondance avec la prise (10) pour fournir un accès au connecteur de fil électrique et/ou de données (2).

8. Système de connecteur d'un système de régulation de rétroviseur, selon la revendication 7, dans lequel l'aire effective de la première partie d'ouverture (1.1) est plus petite que l'aire effective de la seconde partie d'ouverture (1.2).

9. Système de connecteur d'un système de régulation de rétroviseur, selon une quelconque revendication précédente, dans lequel la première ouverture (1) comprend une paroi (11) parallèle à la direction de connexion et configurée pour limiter la position du connecteur de fil électrique et/ou de données (2) dans une direction transversale à la direction de connexion.

10. Système de régulation de rétroviseur pour véhicules à moteur, **caractérisé en ce qu'**il comprend :
- un actionneur de rétroviseur (8) comprenant une prise (10) d'un connecteur de fil électrique et/ou de données (2),
- un système de connecteur selon une quelconque revendication précédente étant configuré pour être situé en correspondance avec la prise (10).

11. Procédé d'assemblage d'un système de connecteur d'un système de régulation de rétroviseur, le système de connecteur étant configuré selon une quelconque revendication précédente 1 à 9, le procédé d'assemblage comprenant l'étape consistant à introduire le connecteur de fil électrique et/ou de données (2) dans l'ouverture (1, 9) de sorte que l'élément d'attache reçoit et évite le mouvement longitudinal du connecteur de fil électrique et/ou de données (2) dans une direction opposée à la direction de connexion.

12. Procédé d'assemblage d'un système de connecteur d'un système de régulation de rétroviseur, selon la revendication 11, dans lequel le système de connecteur est configuré pour être situé en correspondance avec au moins une prise (10) d'un connecteur de fil électrique et/ou de données (2), la prise (10) étant située dans un actionneur de rétroviseur (8), le système de connecteur comprenant :
- au moins une première ouverture (1) configurée pour fournir un accès à la prise (10) du connecteur de câble électrique et/ou de données (2),
- une plaque de montage (6) étant configurée pour être située en correspondance avec la prise (10) du connecteur de fil électrique et/ou de données (2), la première ouverture (1) étant située dans la plaque de montage (6), et
- un élément d'attache configuré pour recevoir le connecteur de fil électrique et/ou de données (2), l'élément d'attache étant configuré pour être situé sur un côté de la première ouverture (1) opposé au côté configuré pour faire face à l'actionneur de rétroviseur (8) et comprenant :
- une première partie (4) ayant une direction longitudinale parallèle à la direction de connexion du connecteur de fil électrique et/ou de données (2) dans la prise (10) et comprenant une première extrémité longitudinale (4.1) jointe adjacente au bord de la première ouverture (1) et une seconde extrémité longitudinale (4.2) opposée à la première extrémité longitudinale (4.1), et
- une seconde partie (5) située au niveau de la seconde extrémité longitudinale (4.2) de la première partie (4) et formant un angle avec la première partie (4), la seconde partie (5) étant configurée pour éviter le mouvement longitudinal du connecteur de fil électrique et/ou de données (2) dans une direction opposée à la direction de connexion ;
- une seconde ouverture (9) configurée pour recevoir un second connecteur de fil électrique et/ou de données (2), la seconde ouverture (9) étant située dans la plaque de montage (6) ; et
- un élément d'attache supplémentaire, la première partie (4) de l'élément d'attache supplémentaire étant jointe adjacente au bord de la seconde ouverture (9),
dans lequel la plaque de montage (6) et l'actionneur de rétroviseur (8) sont assemblés et ensuite le connecteur de fil électrique et/ou de données (2) est connecté à la prise (10) à travers l'ouverture (1, 9).

13. Procédé d'assemblage d'un système de connecteur d'un système de régulation de rétroviseur, selon la revendication 11, dans lequel le système de connecteur est configuré pour être situé en correspondance avec au moins une prise (10) d'un connecteur de fil électrique et/ou de données (2), la prise (10) étant située dans un actionneur de rétroviseur (8), le système de connecteur comprenant, le système de connecteur comprenant :
- au moins une première ouverture (1) configurée pour fournir un accès à la prise (10) du connecteur de câble électrique et/ou de données (2),
- une plaque de montage (6) étant configurée pour être située en correspondance avec la prise (10) du connecteur de fil électrique et/ou de données (2), la première ouverture (1) étant située dans la plaque de montage (6), et
- un élément d'attache configuré pour recevoir le connecteur de fil électrique et/ou de données (2), l'élément d'attache étant configuré pour être situé sur un côté de la première ouverture (1) opposé au côté configuré pour faire face à l'actionneur de rétroviseur (8) et comprenant :
- une première partie (4) ayant une direction longitudinale parallèle à la direction de connexion du connecteur de fil électrique et/ou de données (2) dans la prise (10) et comprenant une première extrémité longitudinale (4.1) jointe adjacente au bord de la première ouverture (1) et une seconde extrémité longitudinale (4.2) opposée à la première extrémité longitudinale (4.1), et
- une seconde partie (5) située au niveau de la seconde extrémité longitudinale (4.2) de la première partie (4) et formant un angle avec la première partie (4), la seconde partie (5) étant configurée pour éviter le mouvement longitudinal du connecteur de fil électrique et/ou de données (2) dans une direction opposée à la direction de connexion ;
et le procédé comprenant les étapes consistant à :
- connecter le connecteur de fil électrique et/ou de données (2) dans la prise (10), et ensuite
- assembler la plaque de montage (6) et l'actionneur de rétroviseur (8) de sorte que l'élément d'attache reçoit le connecteur de fil électrique et/ou de données (2).

14. Procédé d'assemblage d'un système de connecteur d'un système de régulation de rétroviseur, selon la revendication 11, dans lequel le système de connecteur est configuré pour être situé en correspondance avec au moins une prise (10) d'un connecteur de fil électrique et/ou de données (2), la prise (10) étant située dans un actionneur de rétroviseur (8), le système de connecteur comprenant :
- au moins une première ouverture (1) configurée pour fournir un accès à la prise (10) du connecteur de câble électrique et/ou de données (2),
- une plaque de montage (6) étant configurée pour être située en correspondance avec la prise (10) du connecteur de fil électrique et/ou de données (2), la première ouverture (1) étant située dans la plaque de montage (6), et
- un élément d'attache configuré pour recevoir le connecteur de fil électrique et/ou de données (2), l'élément d'attache étant configuré pour être situé sur un côté de la première ouverture (1) opposé au côté configuré pour faire face à l'actionneur de rétroviseur (8) et comprenant :
- une première partie (4) ayant une direction longitudinale parallèle à la direction de connexion du connecteur de fil électrique et/ou de données (2) dans la prise (10) et comprenant une première extrémité longitudinale (4.1) jointe adjacente au bord de la première ouverture (1) et une seconde extrémité longitudinale (4.2) opposée à la première extrémité longitudinale (4.1), et
- une seconde partie (5) située au niveau de la seconde extrémité longitudinale (4.2) de la première partie (4) et formant un angle avec la première partie (4), la seconde partie (5) étant configurée pour éviter le mouvement longitudinal du connecteur de fil électrique et/ou de données (2) dans une direction opposée à la direction de connexion ;
- la première ouverture (1) comprenant une première partie d'ouverture (1.1) et une seconde partie d'ouverture (1.2), la première partie d'ouverture (1.1) et la seconde partie d'ouverture (1.2) étant configurées pour recevoir le connecteur (2) et la première partie d'ouverture (1.1) comprenant l'élément d'attache et étant configurée pour être située en correspondance avec la prise (10) pour fournir un accès au connecteur de fil électrique et/ou de données (2), dans lequel le procédé de connexion comprend, successivement, les étapes consistant à :
- faire passer le connecteur de fil électrique et/ou de données (2) à travers la seconde partie d'ouverture (1.2).
- connecter le connecteur de fil électrique et/ou de données (2) dans la prise (10),
- assembler la plaque de montage (6) et l'actionneur de rétroviseur (8) de sorte que l'élément d'attache reçoit le connecteur de fil électrique et/ou de données (2).

15. Procédé d'assemblage d'un système de connecteur d'un système de régulation de rétroviseur, selon la revendication 11, dans lequel le système de connecteur est configuré pour être situé en correspondance avec au moins une prise (10) d'un connecteur de fil électrique et/ou de données (2), la prise (10) étant située dans un actionneur de rétroviseur (8), le système de connecteur comprenant :
- au moins une première ouverture (1) configurée pour fournir un accès à la prise (10) du connecteur de câble électrique et/ou de données (2),
- une plaque de montage (6) étant configurée pour être située en correspondance avec la prise (10) du connecteur de fil électrique et/ou de données (2), la première ouverture (1) étant située dans la plaque de montage (6), et
- un élément d'attache configuré pour recevoir le connecteur de fil électrique et/ou de données (2), l'élément d'attache étant configuré pour être situé sur un côté de la première ouverture (1) opposé au côté configuré pour faire face à l'actionneur de rétroviseur (8) et comprenant :
- une première partie (4) ayant une direction longitudinale parallèle à la direction de connexion du connecteur de fil électrique et/ou de données (2) dans la prise (10) et comprenant une première extrémité longitudinale (4.1) jointe adjacente au bord de la première ouverture (1) et une seconde extrémité longitudinale (4.2) opposée à la première extrémité longitudinale (4.1), et
- une seconde partie (5) située au niveau de la seconde extrémité longitudinale (4.2) de la première partie (4) et formant un angle avec la première partie (4), la seconde partie (5) étant configurée pour éviter le mouvement longitudinal du connecteur de fil électrique et/ou de données (2) dans une direction opposée à la direction de connexion ;
- la première ouverture (1) comprenant une première partie d'ouverture (1.1) et une seconde partie d'ouverture (1.2), la première partie d'ouverture (1.1) et la seconde partie d'ouverture (1.2) étant configurées pour recevoir le connecteur (2) et la première partie d'ouverture (1.1) comprenant l'élément d'attache et étant configurée pour être située en correspondance avec la prise (10) pour fournir un accès au connecteur de fil électrique et/ou de données (2),
- et dans lequel le procédé de connexion comprend les étapes consistant à : faire passer le connecteur de fil électrique et/ou de données (2) à travers la seconde partie d'ouverture (1.2),
- introduire le connecteur de fil électrique et/ou de données (2) dans la première partie d'ouverture (1.1) de la plaque de montage (6).
